Europäisches Patentamt

European Patent Office

Office européen des brevets

(11) Publication number: **0 098 730**
**B1**

# (12) EUROPEAN PATENT SPECIFICATION

(45) Date of publication of patent specification: **29.08.90**

(51) Int. Cl.⁵: **G 02 B 5/30, G 02 F 1/09**

(21) Application number: **83303738.5**

(22) Date of filing: **28.06.83**

(54) Polarization rotation compensator and optical isolator using the same.

(30) Priority: **28.06.82 JP 109912/82**
**28.06.82 JP 111013/82**

(43) Date of publication of application:
**18.01.84 Bulletin 84/03**

(45) Publication of the grant of the patent:
**29.08.90 Bulletin 90/35**

(84) Designated Contracting States:
**DE FR GB IT**

(56) References cited:
**EP-A-0 054 411**
**DE-A-1 908 409**
**US-A-4 129 357**

**APPLIED OPTICS, vol. 21, no. 11, June 1982,
pages 1943-1949, New York, US; M. SHIRASAKI
et al.: "Bistable magnetoopstic switch for
multimode optical fiber"**

(73) Proprietor: **FUJITSU LIMITED**
**1015, Kamikodanaka Nakahara-ku
Kawasaki-shi Kanagawa 211 (JP)**

(72) Inventor: **Shirasaki, Masataka
Minowa Bldg. 601 1461, Takaishi
Asao-ku Kawasaki-shi Kanagawa 215 (JP)**

(74) Representative: **Fane, Christopher Robin King
et al
HASELTINE LAKE & CO. Hazlitt House 28
Southampton Buildings Chancery Lane
London, WC2A 1AT (GB)**

Courier Press, Leamington Spa, England.

## Description

The present invention relates to a polarisation rotation compensator and to an optical isolator using the polarisation rotation compensator. More particularly, it relates to an optical device comprising in combination a polarisation rotator for rotating the plane of polarisation of a beam of linearly polarised and substantially monochromatic light by an angle which is a function of the wavelength of the light, the rotator being designed to provide a predetermined angle of rotation for a selected wavelength, and a polarisation rotation compensator for compensating any deviation, caused by a change in wavelength of the light received by the polarisation rotator, from said predetermined angle and to an optical isolator which is not dependent on change in the wavelength of the light.

As is well-known, a polariser used in an optical device such as an isolator for optical communication at a wavelength of 1.30 μm (micrometres), for example, has a wavelength dependency. In an optical isolator, for example, when linear polarised light passes through a 45° Faraday rotator, a plane of polarisation rotated 45° about the direction of propagation thereof can be obtained. However, this is possible only for light having a predetermined wavelength. Deviation in the wavelength of the light causes the polarising angle of the plane of polarisation to deviate, resulting in deterioration of the isolation effect of the isolator.

Crystal quartz polarisation rotation compensators which correct deviations in the optical rotating angle of a plane of polarisation due to wavelength deviations are well-known in the art.

However, although a crystal quartz polarisation rotation compensator whose principal axis is parallel to the propagating light can correct deviations in the optical rotating angle, such compensators are large, having a length, for example of 10mm to 15mm along the optical axis when they are used for a long wavelength.

In DE-A-1 908 409 it is proposed to interpose a polarisation rotator between two quarter-wave plates for light of a wavelength $\lambda_1$, arranged with their respective axes at 45° and at $\varphi_0$-45° to the plane of polarisation of the incident light, where $\varphi_0$ is the rotation angle of the rotator for light of wavelength $\lambda_2$. By means of this arrangement the different rotation of the light of wavelength $\lambda_1$ and $\lambda_2$ by the rotator is compensated.

It is desirable to provide a small polarisation rotation compensator that reduces the wavelength dependency of a Faraday rotator at a desired angle of polarisation.

It is also desirable to provide an isolator that uses a polarisation rotation compensator and has little or no wavelength dependency.

According to the present invention, there is provided an optical device comprising in combination a polarisation rotator for rotating the plane of polarisation of a beam of linearly polarised and substantially monochromatic light by an angle which is a function of the wavelength of the light, the rotator being designed to provide a predetermined angle of rotation for a selected wavelength, and a polarisation rotation compensator for compensating any deviation, caused by a change in wavelength of the light received by the polarisation rotator, from said predetermined angle, the device being characterised in that the polarisation rotation compensator comprises a half-wave plate and a quarter-wave plate, and that the rotator, the half-wave plate and the quarter-wave plate are arranged with regard to the propagation direction of said beam either in a first way, in which the half-wave plate is followed by the quarter-wave plate and the rotator and in which the principal axes of the half-wave plate and the quarter-wave plate are oriented at an angle of $\theta/2$ and $\theta$, respectively, with regard to the polarisation plane of the light incident on the compensator, or in a second way in which the rotator is followed by the quarter-wave plate and the half-wave plate and in which the principal axes of the quarter-wave plate and the half-wave plate are oriented at an angle of 0 and $\theta/2$, respectively, with regard to the polarisation plane of the light incident on the compensator, the angle $\theta$ being selected so that the deviation from said predetermined angle of rotation is compensated.

In an embodiment of the invention there is provided an optical isolator comprising a first birefringent wedge plate; a polarisation rotation compensator comprising a half-wave plate, a quarter-wave plate and a Faraday rotator arranged in the manner set forth above; and a second birefringent wedge plate; wherein in the one case the Faraday rotator, quarter-wave plate, and half-wave plate, and in the other case the half-wave plate, quarter-wave plate and Faraday rotator, are arranged in the order of propagation of the backward light.

Reference will now be made, by way of example, to the accompanying drawings, in which:-

Figs. 1A and 1B are cross-sectional views of a conventional isolator;

Fig. 2 is a graph of the wavelength (μm) in relation to the isolation (dB) and polarisation rotation (deg);

Fig. 3 is a perspective view of an example of a polarisation rotation compensator embodying the present invention;

Fig. 4 is a diagram of the principle of operation of the polarisation rotation compensator shown in Fig. 3 using a Poincaré sphere; and

Figs. 5A, 5B and 5C are schematic views of examples of an isolator embodying the present invention.

Before explaining the preferred embodiments of the invention, a description will be made of the prior art for reference.

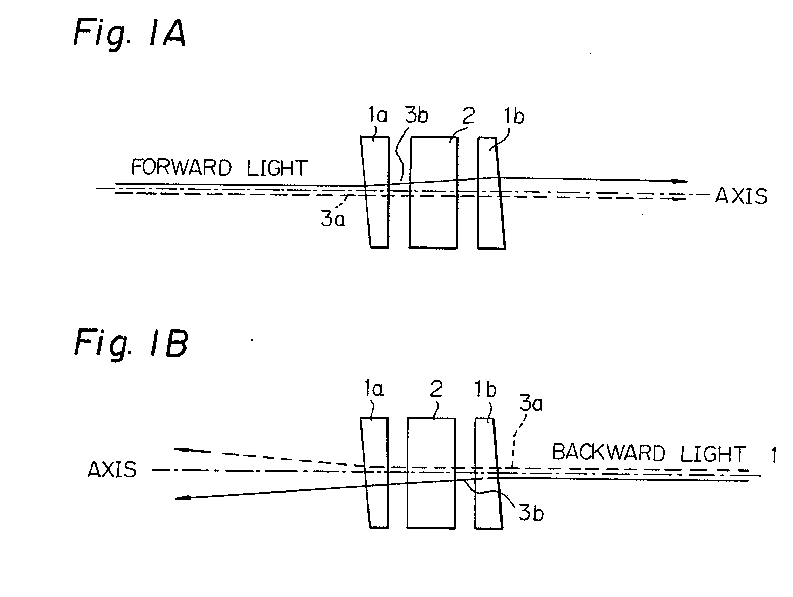

An isolator using tapered birefringent wedges, as shown in Figs. 1A and 1B has previously been disclosed in EP-A-54411. In Figs. 1A and 1B, birefringent wedges 1a and 1b are placed at the front and back of a Faraday rotator 2, consisting of a single crystal of yttrium-iron-garnet (YIG). The birefringent wedge 1a refracts the ordinary and the extraordinary rays 3a and 3b at different angles. The Faraday rotator 2 rotates the plane of polarisation 45°. Since the Faraday rotation is dependent on the wavelength of the incident light, the wavelength region over which 45° rotation can be obtained is very narrow.

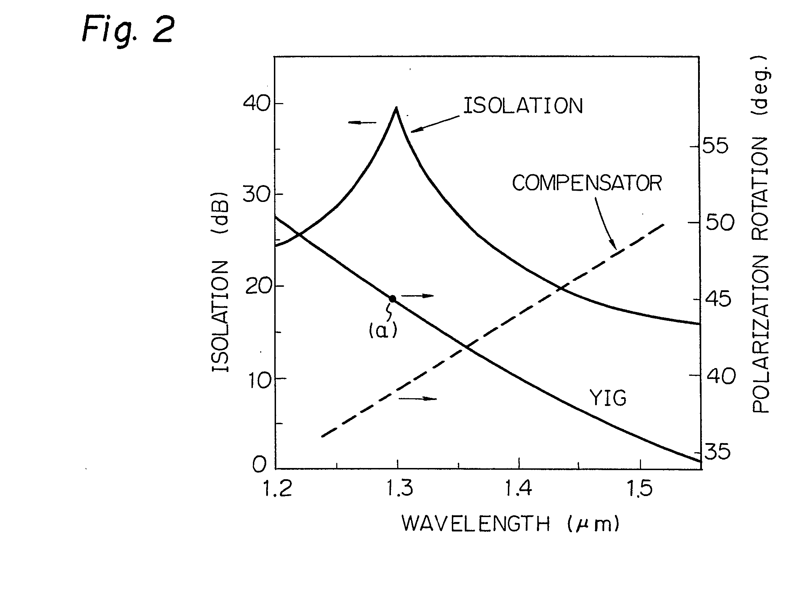

As shown in Fig. 2, the isolation is highest at a wavelength of 1.3 μm when the Faraday rotator (YIG) is adjusted such that the polarisation is rotated 45° at a wavelength of 1.3 μm (a). When the wavelength is shorter or longer than 1.3 μm, the isolation level rapidly decreases.

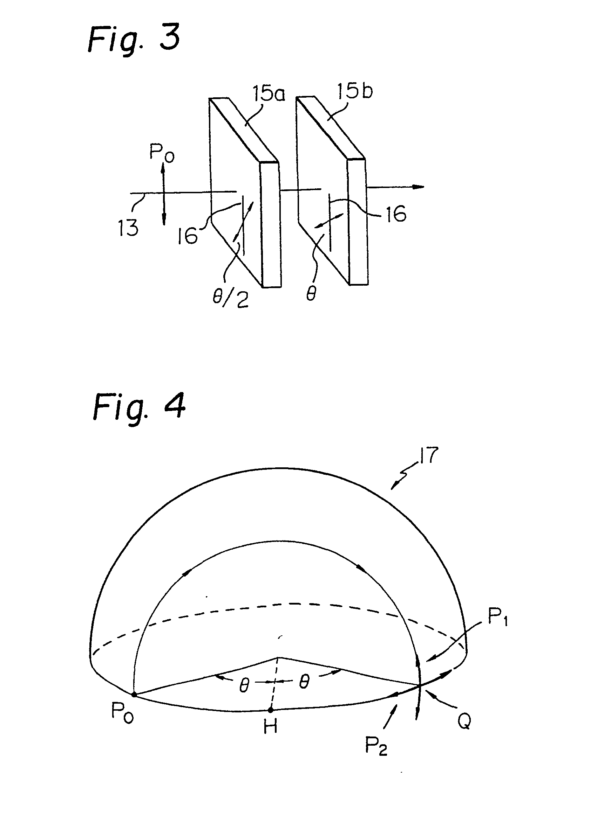

Fig. 3 shows an example of a polarisation rotation compensator embodying the present invention when the compensator is arranged at the front of the Faraday rotator. The compensator comprises a half-wave plate 15a and a quarter-wave plate 15b. The half-wave plate 15a is inclined at an angle of $\theta/2$, and the quarter-wave plate 15b is inclined at an angle of $\theta$, with respect to the vertical axis.

The principle of operation of the polarisation rotation compensator can be illustrated by the Poincaré sphere 17 shown in Fig. 4. In the Poincaré spherical expression, linearly polarised light is indicated by the meridian, circularly polarised light is indicated by the poles, and elliptically polarised light is indicated by the other part of the spherical surface. Incident linear polarisation having a wavelength of 1.4 μm is transformed from the $P_0$ state to the Q state by the half-wave plate 15a, whose principal axis lies in the H direction, i.e., the angle between the principal axis and the polarisation plane of the incident light is $\theta/2°$. The polarisation plane of the incident light is transformed $\theta°$ by the halfwave plate. When the wavelength of the incident light deviates from 1.4 μm, the state is distributed on the curve $P_1$ according to the wavelengths. The polarisation is transformed into states distributed on the curve $P_2$ by the quarter-wave plate 15b, whose principal axis lies in the Q-direction, i.e. the angle between the principal axis and the polarisation plane of the incident light is $\theta$.

Consequently, nearly linear polarisation is passed through the polarisation rotation compensator. Any deviation of the polarisation rotation from 45° is proportional to the deviation of the wavelength from 1.4 μm.

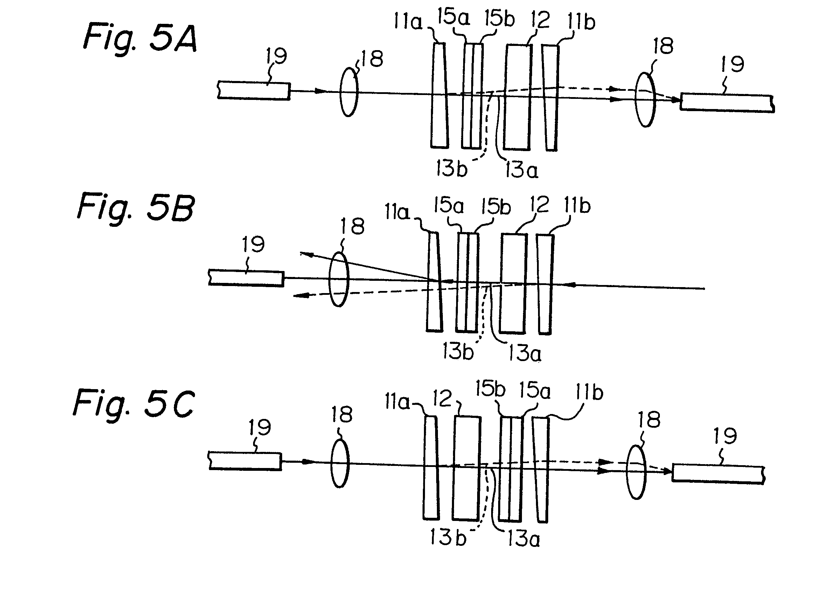

Figs. 5A and 5B show one example of an optical isolator for use with single-mode fibres and Fig. 5C shows another arrangement. In each case the isolator comprises a first birefringent wedge 11a, the above-mentioned polarisation rotation compensator composed of a half-wave plate 15a and a quarter-wave plate 15b, a Faraday rotator 12 consisting, for example of a single crystal of YIG, and a second birefringent wedge 11b. The first and second birefringent wedges 11a, 11b together form a polarising component. The present optical isolator is designed to maintain a high isolation over a wavelength region of 1.3 μm to 1.5 μm. Accordingly, all components are designed with a centre wavelength of 1.4 μm.

The isolator shown in Fig. 5A works as follows. Incident light from a fibre 19 on the left enters the birefringent wedge 11a through a lens 18 on the left. The birefringent wedge 11a refracts the ordinary ray 13a and the extraordinary ray 13b at different angles, following which these pass through the above-described polarisation rotation compensator composed of the half-wave plate 15a whose principal axis is inclined at an angle of $\theta/2$ with respect to the plane of polarisation of the incident light and the quarter-wave plate 15b whose principal axis is inclined at an angle of $\theta$ with respect to the plane of polarisation of the incident light, each plate being formed from a single quartz crystal, and on to the Faraday rotator 12. The Faraday rotator 12 rotates the plane of polarisation 45°. Since the Faraday rotation depends on the wavelength, the wavelength region that gives 45° rotation is very narrow. This makes it possible to maintain a high isolation only in a very limited wavelength region, unless deviation from 45° rotation is compensated for. A polarisation rotation compensator is used in the present isolator in order to broaden the wavelength region over which a high isolation can be maintained. After passing through the Faraday rotator 12, the ordinary and extraordinary rays enter the second birefringent wedge 11b, through which they pass parallel to each other. They are then condensed to the right-hand fibre 19 through the right-hand lens 18.

As explained above with reference to Figs. 3 and 4, nearly linearly polarised light is passed through the polarisation rotation compensator, and the deviation of the polarization rotation from 45° is proportional to the wavelength deviation from 1.4 μm.

These deviations in the polarisation rotation are summed for the forward light, i.e. the incident light, as indicated in Figs. 5A and 5C, and cancelled for the backward light, as indicated in Fig. 5B.

Thus, when the light propagates in the forward direction (from the left to the right in Fig. 5A), the ordinary and extraordinary rays in the left birefringent wedge 11a are respectively transformed into ordinary and extraordinary rays by the birefringent wedge 11b and refraction by these wedges cancelled out. On the other hand, when the light propagates in the backward direction, as shown in Fig. 5B, the ordinary and extraordinary rays at the right birefringent wedge 11b are respectively transformed into the extraordinary and ordinary rays at the left birefringent wedge 11a, and refraction by these wedges is not cancelled out.

In the optical rotator shown in Fig. 5C the polarisation rotation compensator of the invention in which the quarter-wave plate 15b precedes the half-wave plate 15a in the light path is employed. As explained above, when arranged in this order, the quarter-wave plate is disposed with its principal axis parallel to the plane of polarisation of the incident light and the half-wave plate with its principal axis inclined at an angle of $\theta/2$ with respect to the plane of polarisation of the incident light.

Incident light from the fibre 19 on the left passes through the lens 18 and enters the birefringent wedge 11a, which refracts the ordinary ray 13a and the extraordinary ray 13b at different angles. The rays pass through the Faraday rotator 12, which rotates the plane of polarisation 45°, and then through the polarisation compensator and enter the second birefringent wedge 11b, through which they pass parallel to each other. They are then condensed to the fibre 19 on the right through the lens 18 on the right.

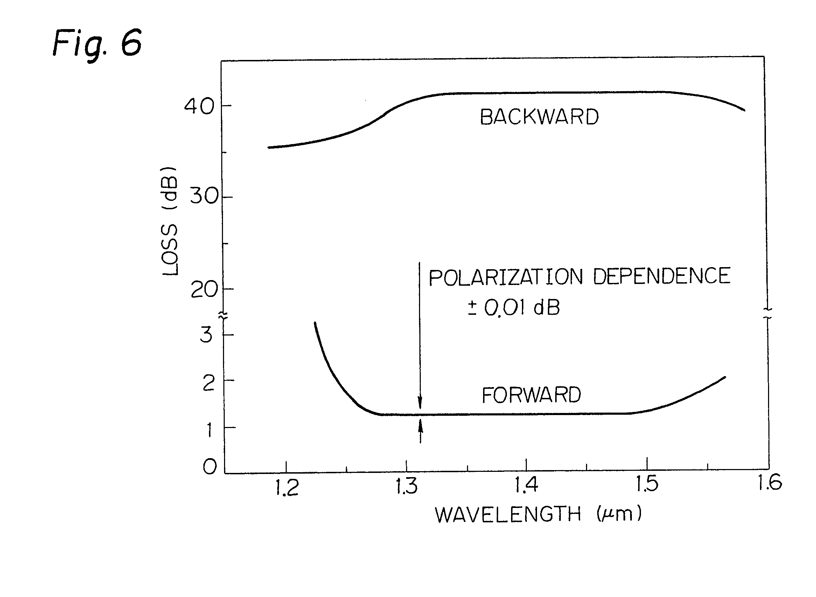

The present optical isolator can give improved isolation, as shown in Fig. 6. Namely, high isolation of approximately 40 dB can be obtained for backward light in the wavelength region of 1.3 to 1.5 µm. An isolation value of 40 dB could previously be obtained only at a wavelength of 1.3 µm, as shown in Fig. 2.

The present isolator therefore is desirably independent of the wavelength. As explained above, the present polarisation rotation compensator is composed of two coupled wavelength plates having thicknesses of 30 to 100 µm and diameters of 3 to 5 mm, enabling the sizes of the compensator and the present optical isolator to be reduced.

It is preferable that the half-wave plate and quarter-wave plate each be formed from a single quartz crystal. The polarisation rotation compensator should preferably range from 30 µm to 100 µm in thickness, and from 3mm to 5mm in diameter.

Furthermore, it is desirable that the first and second birefringent wedges be made of rutile or calcite, and that the Faraday rotator be made of YIG or paramagnetic glass.

## Claims

1. An optical device comprising in combination:
a polarisation rotator (12) for rotating the plane of polarisation of a beam of linearly polarised and substantially monochromatic light by an angle which is a function of the wavelength of the light, the rotator being designed to provide a predetermined angle of rotation for a selected wavelength, and,
a polarisation rotation compensator (15a, 15b) for compensating any deviation, caused by a change in wavelength of the light received by the polarisation rotator, from said predetermined angle,
the device being characterised in that,
the polarisation rotation compensator comprises a half-wave plate (15a) and a quarter-wave plate (15b),
the rotator (12), the half-wave plate (15a) and the quarter-wave plate (15b) are arranged with regard to the propagation direction of said beam either in a first way, in which the half-wave plate is followed by the quarter-wave plate and the rotator and in which the principal axes of the half-wave plate and the quarter-wave plate are oriented at an angle of $\theta/2$ and $\theta$, respectively, with regard to the polarisation plane of the light incident on the compensator, or in a second way in which the rotator is followed by the quarter-wave plate and the half-wave plate and in which the principal axes of the quarter-wave plate and the half-wave plate are oriented at an angle of 0 and $\theta/2$, respectively, with regard to the polarisation plane of the light incident on the compensator, the angle $\theta$ being selected so that the deviation from said predetermined angle of rotation is compensated.

2. A device according to claim 1 in which said combination of compensator and rotator is arranged between a pair of birefringent wedges (11a and 11b), whereby respective refractions of said light beam by said pair of birefringent wedges cancel each other so that beams corresponding to ordinary and extraordinary rays of said light beam in each of said birefringent wedges are output in parallel, whereas respective refractions offset rays of light travelling in a direction opposite to said light beam do not cancel and are output in different directions.

3. A device according to claim 2 in which said combination of compensator rotator and wedges is arranged between a pair of lenses (18), whereby said rays corresponding to said light beam are focused to the same point in the light corresponding to said light beam that is output from the combination including said lenses, whereas the respective rays of the light travelling in said opposite direction from said incident light are focused at different respective points by said combination including said lenses.

4. A device according to any one of claims 1 to 3, wherein said rotator is a Faraday rotator.

5. A device according to any preceding claim wherein said quarter-wave and half-wave plates are made of single-crystalline quartz.

6. A device according to any one of claims 2 to 5 wherein the thickness of said compensator is in the range from 30 to 100 micrometres.

7. A device according to any preceding claim wherein the diameter of said compensator is in the range from 3 to 5mm.

8. A device according to any one of claims 3 to 7 wherein said wedges are of rutile or calcite.

9. A device according to any preceding claim wherein said compensation is over a range including 1.3 to 1.5 micrometres.

10. A device according to claim 9 wherein the deviation from said predetermined angle compensated by said compensator is proportional to the change of the wavelength from 1.4 micrometres.

11. A device according to any preceding claim wherein the light incident on said compensator is first incident on said half-wave plate.

12. A device according to any one of claims 1 to 10 wherein the light incident on said compensator is first incident on said quarter-wave plate.

## Patentansprüche

1. Optische Vorrichtung, welche in Kombination umfaßt:

einen Polarisationsrotator (12), zum Rotieren der Polarisationsebene eines Strahles von linear polarisiertem und im wesentlichen monochromatischem Licht um einen Winkel, welcher eine Funktion der Wellenlänge des Lichts ist, wobei der Rotator so ausgelegt ist, daß er einen vorbestimmten Rotationswinkel für eine ausgewählte Wellenlänge liefert, und,

einen Polarisationsrotationskompensator (15a, 15b), zum Kompensieren irgendeiner Abweichung, die durch eine Änderung der Wellenlänge des von dem polarisationsrotator empfangenen Lichts verursacht ist, von dem vorbestimmten Winkel,

welche Vorrichtung dadurch gekennzeichnet ist, daß

der Polarisationsrotationskompensator eine Halbwellenplatte (15a) und eine Viertelwellenplatte (15b) umfaßt,

der Rotator (12), die Halbwellenplatte (15a) und die Viertelwellenplatte (15b) in Bezug auf die Ausbreitungsrichtung des genannten Strahles entweder auf einem ersten Weg angeordnet sind, auf welchem auf die Halbwellenplatte eine Viertelwellenplatte und der Rotator folgt, und auf welchem die Hauptachsen der Halbwellenplatte und der Viertelwellenplatte in einem Winkel von θ/2 bzw. θ in Bezug auf die Polarisationsebene des auf den Kompensator auffallenden Lichts angeordnet sind, oder auf einem zweiten Weg, auf welchem auf den Rotator die Viertelwellenplatte und die Halbwellenplatte folgt, und auf welchem die Hauptachsen der Viertelwellenplatte und der Halbwellenplatte in einem Winkel von 0 bzw. θ/2 orientiert sind, in Bezug auf die Polarisationsebene des auf den Kompensator auffallenden Lichts, wobei der Winkel θ so ausgewählt ist, daß die Abweichung von dem vorbestimmten Rotationswinkel kompensiert wird.

2. Vorrichtung nach Anspruch 1, bei welcher die genannte Kombination aus Kompensator und Rotator zwischen einem Paar von doppelbrechenden Keilen (11a, 11b) angeordnet ist, wobei die entsprechenden Brechungen der Lichtstrahlen durch das genannte Paar von doppelbrechenden Keilen einander löschen, so daß Strahlen, die ordentlichen und außerordentlichen Strahlen des genannten Lichtstrahls in jedem der doppelbrechenden Keile entsprechen, parallel ausgegeben werden, wohingegen entsprechende Brechungen von versetzten Lichtstrahlen, die in einer Richtung entgegengesetzt zu dem genannten Lichtstrahl wandern, nicht auslöschen und in verschiedenen Richtungen ausgegeben werden.

3. Vorrichtung nach Anspruch 2, bei der die genannte Kombination von Kompensator, Rotator und Keilen zwischen einem Paar von Linsen (18) angeordnet ist, wodurch die genannten Strahlen, welche dem genannten Lichtstrahl entsprechen, auf denselben Punkt in dem Licht fokussiert werden, welches dem Lichtstrahl entspricht, der von der Kombination einschließlich der genannten Linsen ausgegeben wird, wohingegen die entsprechenden Strahlen von Licht, welches in entgegengesetzte Richtung von dem genannten auffallenden Licht wandert, durch die genannte Kombination einschließlich der genannten Linsen in entsprechend verschiedenen Punkten fokussiert wird.

4. Vorrichtung nach einem der Ansprüche 1 bis 3, bei der der genannte Rotator ein Faraday-Rotator ist.

5. Vorrichtung nach einem der vorhergehenden Ansprüche, bei der die genannte Viertelwellen- und Halbwellenplatten aus einem einkristallinen Quartz hergestellt sind.

6. Vorrichtung nach einem der Ansprüche 2 bis 5, bei der die Dicke des genannten Kompensators im Bereich von 30 bis 100 Mikrometern liegt.

7. Vorrichtung nach einem der vorhergehenden Ansprüche, bei der der Durchmesser des genannten Kompensators im Bereich von 3 bis 5mm liegt.

8. Vorrichtung nach einem der Ansprüche 3 bis 7, bei dem die genannten Keile aus Rutil oder calcit bestehen.

9. Vorrichtung nach einem der vorhergehenden Ansprüche, bei der die genannte Kompensation sich über einen Bereich erstreckt, der 1,3 bis 1,5 Mikrometer einschließt.

10. Vorrichtung nach Anspruch 9, bei der die Abweichung von dem genannten vorbestimmten Winkel, der durch den genannten Kompensator kompensiert wird, proportional zur Änderung der Wellenlänge von 1,4 Mikrometern ist.

11. Vorrichtung nach einem der vorhergehenden Ansprüche, bei der das auf den genannten Kompensator auffallende Licht zuerst auf die genannte Halbwellenplatte auffällt.

12. Vorrichtung nach einem der Ansprüche 1 bis 10, bei der das auf den Kompensator auffallende Licht zunächst auf die genannte Viertelwellenplatte auffällt.

## Revendications

1. Dispositif optique comprenant en combinaison:

un dispositif de rotation de la polarisation (12) destiné à faire tourner le plan de polarisation d'un faisceau de lumière sensiblement monochromatique qui est polarisée linéairement, d'un angle qui est fonction de la longueur d'onde de la lumière, le dispositif de rotation étant destiné à assurer un angle prédéterminé de rotation à une longueur d'onde choisie, et,

un compensateur de la rotation de la polarisation (15a, 15b) destiné à compenser tout écart par rapport à l'angle prédéterminé, cet écart pouvant être provoqué par un changement de la longueur d'onde de la lumière reçue par le dispositif de rotation de la polarisation,

le dispositif étant caractérisé en ce que,

le compensateur de la rotation de la polarisation comporte une lame demi-onde (15a) et une lame quart d'onde (15b), et,

le dispositif de rotation (12), la lame demi-onde (15a) et la lame quart d'onde (15b) sont disposés, par rapport à la direction de propagation du faisceau, soit d'une première manière dans laquelle la lame demi-onde est suivie par la lame quart d'onde et le dispositif de rotation et dans laquelle les axes principaux de la lame demi-onde et de la lame quart d'onde sont orientés avec des angles $\theta/2$ et $\theta$ respectivement par rapport au plan de polarisation de la lumière incidente parvenant sur le condensateur, soit d'une seconde manière dans laquelle le dispositif de rotation est suivi par la lame quart d'onde et la lame demi-onde et dans laquelle les axes principaux de la lame quart d'onde et de la lame demi-onde sont orientés avec des angles 0 et $\theta/2$ respectivement par rapport au plan de polarisation de la lumière incidente parvenant sur le compensateur, l'angle $\theta$ étant choisi de manière que l'écart par rapport à l'angle prédéterminé de rotation soit compensé.

2. Dispositif selon la revendication 1, dans lequel la combinaison du compensateur et du dispositif de rotation est disposée entre deux coins biréfringents (11a et 11b), si bien que les réfractions respectives du faisceau lumineux par les deux coins biréfringents se compensent et que les faisceaux correspondant aux rayons ordinaire et extraordinaire du faisceau lumineux, dans chacun des coins biréfringents, sont transmis parallèlement, alors que les réfractions respectives des rayons lumineux décalés se déplaçant en sens opposé au sens du faisceau lumineux ne s'annulent pas et sont transmises dans des directions différentes.

3. Dispositif selon la revendication 2, dans lequel la combinaison du compensateur, du dispositif de rotation et des coins est placée entre deux lentilles (18), si bien que les rayons correspondant au faisceau lumineux sont focalisés au même point dans la lumière correspondant au faisceau lumineux qui est transmis par la combinaison comprenant les lentilles, alors que les rayons respectifs de la lumière se déplaçant en sens opposé à celui de la lumière incidente sont focalisés en des points respectifs différents par ladite combinaison comprenant les lentilles.

4. Dispositif selon l'une quelconque des revendications 1 à 3, dans lequel le dispositif de rotation est du type de Faraday.

5. Dispositif selon l'une quelconque des revendications précédentes, dans lequel les lames quart d'onde et demi-onde sont formées de quartz monocristallin.

6. Dispositif selon l'une quelconque des revendications 2 à 5, dans lequel l'épaisseur du compensateur est comprise entre 30 et 100 µm.

7. Dispositif selon l'une quelconque des revendications précédentes, dans lequel le diamètre du compensateur est compris entre 3 et 5mm.

8. Dispositif selon l'une quelconque des revendications 3 à 7, dans lequel les coins sont formés de rutile ou de calcite.

9. Dispositif selon l'une quelconque des revendications précédentes, dans lequel la compensation est réalisée dans une plage comprenant 1,3 à 1,5 µm.

10. Dispositif selon la revendication 9, dans lequel l'écart par rapport à l'angle prédéterminé qui est compensé par le compensateur est proportionnel à la variation de la longueur d'onde par rapport à 1,4 µm.

11. Dispositif selon l'une quelconque des revendications précédentes, dans lequel la lumière incidente parvenant sur le compensateur tombe d'abord sur la lame demi-onde.

12. Dispositif selon l'une quelconque des revendications 1 à 10, dans lequel la lumière incidente parvenant sur le compensateur tombe d'abord sur la lame quart d'onde.

## Fig. IA

FORWARD LIGHT

1a  3b  2  1b

AXIS

3a

EP 0 098 730 B1

## Fig. IB

1a  2  1b  3a

AXIS

BACKWARD LIGHT  1

3b

Fig. 2

## Fig. 3

## Fig. 4

EP 0 098 730 B1

*Fig. 5A*

11a  15a  15b  12  11b

19    18                                    18      19

13b    13a

*Fig. 5B*

11a  15a  15b  12  11b

19    18

13b    13a

*Fig. 5C*

11a  12  15b  15a  11b

19    18                                    18      19

13b    13a

Fig. 6

LOSS (dB)

BACKWARD

POLARIZATION DEPENDENCE
± 0.01 dB

FORWARD

WAVELENGTH (μm)

EP 0 098 730 B1